# EUROPÄISCHE PATENTSCHRIFT

(11) **EP 2 675 856 B1**
(45) Veröffentlichungstag und Bekanntmachung des Hinweises auf die Patenterteilung: **09.08.2017**
(21) Anmeldenummer: 12706773.4
(22) Anmeldetag: 17.02.2012
(51) Int. Cl.: C09D 183/04, F28F 13/18, B01J 20/28, B01J 20/32

(54) **VERFAHREN ZUR BESCHICHTUNG EINER WÄRMETAUSCHERSTRUKTUR, BESCHICHTETE WÄRMETAUSCHERSTRUKTUR UND DEREN VERWENDUNG**
METHOD FOR COATING A HEAT EXCHANGER STRUCTURE, COATED HEAT EXCHANGER STRUCTURE AND USE THEREOF
PROCÉDÉ POUR APPLIQUER UN REVÊTEMENT SUR UNE STRUCTURE D'ÉCHANGEUR DE CHALEUR, STRUCTURE D'ÉCHANGEUR DE CHALEUR REVÊTUE ET UTILISATION DE CETTE DERNIÈRE

(30) Priorität: 18.02.2011 DE 102011011688
(43) Veröffentlichungstag der Anmeldung: 25.12.2013
(73) Patentinhaber: Fraunhofer-Gesellschaft zur Förderung der angewandten Forschung e.V., 80686 München (DE)
(72) Erfinder: HENNINGER, Stefan, 79346 Endingen (DE); KUMMER, Harry, 79114 Freiburg (DE)
(74) Vertreter: Pfenning, Meinig & Partner mbB
(86) Internationale Anmeldenummer: PCT/EP2012/000722
(87) Internationale Veröffentlichungsnummer: WO 2012/110255

(56) Entgegenhaltungen:
- WO-A1-2006/079448
- DE-A1-102004 011 545

## Beschreibung

Die Erfindung betrifft ein Verfahren zur Beschichtung einer Wärmetauscherstruktur, bei der ein poröses Sorbens zusammen mit einem Bindemittel auf einer Trägerstruktur aufgetragen und unter Ausbildung einer Schicht vernetzt und/oder verfilmt wird. Ebenso betrifft die Erfindung derart beschichtete Wärmetauscherstrukturen. Die erfindungsgemäßen Wärmetauscherstrukturen können in Wärmepumpen, Wärmespeichern oder Kältemaschinen sowie sorptivgestützte Klimatisierungsanalagen eingesetzt werden.

Das Ausnutzen des physikalischen Prozesses der Adsorption von Gasen an mikroporösen Oberflächen und damit der Einsatz in thermisch angetriebenen Wärmepumpen und Kältemaschinen hat verschiedene Vorteile:
- Nutzung von Abwärme bzw. Wärme auf niedrigem Temperaturniveau für Kühlung, damit einhergehend eine energieeffiziente Kühlung oder auch solare Kühlung;
- Entlastung des elektrischen Netzes durch thermisch angetriebene Kältemaschinen,
- primärenergetisch effiziente Heizung und Kühlung, durch den Wärmepumpeneffekt wird Umweltwärme (Niedertemperaturwärme) auf ein nutzbares Niveau angehoben.

Nachteile entstehen durch die bislang noch sehr großen Geräte und der damit verbundenen schlechten Leistungsdichte im Vergleich zu konventionellen mechanischen Systemen.

Momentan gebaute Wärmepumpen oder Adsorptionskälteanlagen haben geringe Leistungsdichten, was in einer sehr großen Bauweise resultiert, um entsprechende Kälte- oder Wärmeleistungen zu erzielen. Wichtige Ansätze um die Bauweise kompakter zu machen und die Leistungsdichte zu erhöhen liegen darin, die Sorptionskammer kleiner zu bauen. Dafür muss eine hohe Oberfläche des Wärmetauschers gewährleistet sein und eine gute Anbindung des Sorptionsmaterials daran.

Adsorptionskältemaschinen und -Wärmepumpen sowie thermische Speicher auf Basis der Adsorption von Gasen an mikroporösen Feststoffen sind aus dem Stand der Technik bekannt, wobei hauptsächlich Wasser sowie auch Silikagele, Zeolithe und Zeolith-ähnliche Materialien als Arbeitsmittel eingesetzt werden. Hierbei werden zumeist Schüttungen oder lose Klebungen eingesetzt.

Zusätzlich kam die Beschichtungstechnologie in den letzten Jahren auf, die sich jedoch häufig durch eine unzureichende Ankopplung sowie durch mangelnde thermische und mechanische Stabilität auszeichnet. Hier sind die möglichen Systeme aus Binder und aktivem Sorptionsmaterial sowie die Trägerstruktur bisher sehr eingeschränkt.

Aus der DE 10 2008 050 926 A1 ist ein Adsorberelement bekannt, das aus einem Trägermaterial besteht, auf dem mit einem Bindematerial Adsorbenspartikel als Adsorberschicht angeordnet sind. Als Bindemittel werden hier kolloidale Bindemittel auf Basis von Siliziumoxid oder Aluminiumoxid eingesetzt.

Ausgehend hiervon war es Aufgabe der vorliegenden Erfindung, ein Verfahren zur Beschichtung von Wärmetauscherstrukturen bereitzustellen, das ein Beschichtung mit sehr guter Wärmeleitfähigkeit bereitstellt, wodurch eine sehr gute Wärmeankopplung an den Wärmetauscher ermöglicht wird.

Diese Aufgabe wird durch das Verfahren mit den Merkmalen des Anspruchs 1 sowie die beschichtete Wärmetauscherstruktur mit den Merkmalen des Anspruchs 14 gelöst. In Anspruch 23 werden erfindungsgemäße Verwendungen aufgeführt. Die weiteren abhängigen Ansprüche zeigen vorteilhafte Weiterbildungen auf.

Erfindungsgemäß wird ein Verfahren zur Beschichtung einer Wärmetauscherstruktur bereitgestellt, bei dem
a) eine wässrige Dispersion aus mindestens einem porösen Sorbens sowie mindestens einem Bindemittel aus der Gruppe der Polyorganosiloxane hergestellt wird, wobei die Dispersion auf einer Wärmetauscherstruktur gebildet oder nach Herstellung auf einer Trägerstruktur aufgetragen wird und
b) eine Filmbildung und/oder Vernetzung des Bindemittels unter Ausbildung einer Schicht erfolgt.

Der Kern der vorliegenden Erfindung geht zurück auf die Kombination von hochporösen Sorbentien mit Wärmetauscherstrukturen, die zum Teil eine stark vergrößerte Oberfläche aufweisen, und einem Bindeverfahren zur Ankopplung des aktiven Sorbens auf dieser Trägerstruktur.

Gegenstand der Erfindung ist somit ein Beschichtungsverfahren, das auf dem Anmischen einer wässrigen Dispersion aus Bindemittel und Sorbens besteht und anschließender Auftragung der Dispersion auf eine metallische oder nichtmetallische Oberfläche. Die Filmbildung und/oder Vernetzung findet bei Temperaturen ab 0 °C statt. Die Filmbildung/Vernetzung kann vorzugsweise bei Temperaturen bis zu 300 °C thermisch beschleunigt werden. Alternativ oder zusätzlich zur thermischen Behandlung kann man eine Beschleunigung der Filmbildung/Vernetzung und Trocknung der Probe durch Anlegen von Vakuum oder durch Anlegen einer Spannung erreichen.

Die Herstellung einer stabilen Dispersion erfolgt aus einem pulverförmigen Sorbens. Unter eine stabilen Dispersion ist im Rahmen der vorliegenden Erfindung eine Dispersion zu verstehen, die innerhalb eines Zeitraums von 2 bis 24 h stabil ist und keine Agglomerate bildet. Als Sorbentien kommen vorzugsweise hierbei neben den klassischen, wie z.B. Silicagelen und Zeolithen, auch Zeolith-ähnliche Materialien, wie Aluminophosphate, Silica-aluminophosphate sowie metallorganische Gerüstverbindungen (MOFs) oder poröse Koordinationspolymere (PCPs), Zeolith-Imidazolat-Netzwerke (ZiFs) und MCMs aber auch Aktivkohlen in Frage. Die Dispersion ist dabei vorzugsweise eine Suspension.

Das mindestens eine Sorbens liegt bevorzugt als Pulver vor, besonders bevorzugt mit einer mittleren Kristallitgröße von 50 nm bis 20 µm und mit einer mittleren Korngröße von 3 bis 200 µm. Die Kristallite sind dabei die kleinsten Bestandteile, während die Körner Agglomerate von vielen Kristalliten darstellen. Prinzipiell bedeuten kleinere Kristallite besser Adsorptionsdynamik. Erfindungsgemäß liegt das Ausgangsmaterial aber vorzugsweise bereits als Pulver mit kleinen Körnern vor. Durch zusätzliches andauerndes Durchmischen bzw. Konvektion kann eine bessere Verarbeitbarkeit über mehrere Tage gewährleistet werden. Eine bessere Standzeit über mehrere Monate kann durch Zugabe geeigneter Stabilisatoren sichergestellt werden. Hierfür geeignet ist eine pH-Wert-Änderung, (pH ≈ 11,5) oder der Einsatz amphiphiler Moleküle. Der Anteil an getrocknetem Sorbens in Wasser umfasst 70 % bis 95 %. Die fertige Dispersion kann sowohl einen mittleren pH im Bereich von 7 besitzen oder auch sauer oder basisch sein.

Größere Sorbens-Pulver oder Granulate, die nicht mehr stabil dispergiert werden, können auch geschüttet werden. Dazu wird das Material trocken oder befeuchtet auf eine vorher aufgetragene Schicht der Binder-Emulsion/Dispersion geschüttet und anschließend getrocknet.

Das Bindemittel wird je nach Sorbens der Dispersion gleich zugesetzt. Erfolgt eine langsame Agglomeration und Phasenseparation in Verbindung mit dem Sorbens, wird das Bindemittel erst kurz vor dem Auftragen der Beschichtung zugegeben. Hier erfolgt die Stabilisierung dann durch starkes Rühren der Dispersion und/oder durch Zugabe geeigneter Stabilisatoren.

Als Bindemittel wird mindestens eine Komponente aus der Familie der Polyorganosiloxane verwendet. Vorzugsweise wird eine (Di)methyl(di)phenyl-organosiloxan-Mischung verwendet. Allerdings sind alle Variationen von aliphatischen, olefinischen oder aromatischen Diorgano-Siloxanen möglich. Des Weiteren können auch mono- oder tri-organo-Siloxane eingesetzt werden.

Es ist hier auch möglich, Silane, Silikate, Kieselsäure und Natron-Wasserglas als multifunktionelle Vernetzer (Crosslinker) einzusetzen, um neben dem Verfilmen eine hohe chemische Vernetzung des Bindemittels zu erreichen.

Weitere Zusätze, wie Stabilisatoren, Emulgatoren und/oder niedermolekulare funktionelle Moleküle verbessern die Verarbeitung. Eventuelle Lösungsmittelrückstände, unter anderem aus dem Herstellungsprozess, können enthalten sein, sollten aber beim Erhitzen und/oder Vakuumbehandlung restlos verdampfen.

Der Bindemittelanteil kann dabei über einen großen Bereich variiert werden. Die Stabilität ist hier noch bei sehr geringen Bindemittelanteilen gegeben. Der Bindemittelanteil beträgt hier vorzugsweise von 1 bis 20 Gew.-%, bevorzugt von 5 bis 15 Gew.-%.

Vorzugsweise weist die Dispersion, bezogen auf die Trockenmasse ohne Wasseranteil, folgende Zusammensetzung auf:
70% bis 95 Gew.-%, insbesondere von 80 bis 95 Gew.-% des Sorbens,
1 bis 20 Gew.-%, insbesondere von 5 bis 15 Gew.-% des Bindemittels,
0 bis 10 Gew.-% Zusatzstoffen ausgewählt aus der Gruppe der Stabilisatoren, Emulgatoren, niedermolekularen funktionellen Zusätzen zur Verbesserung der Verarbeitbarkeit sowie Mischungen hiervon.

Mit dem erfindungsgemäßen Verfahren können verschiedene Trägerstrukturen, wie einfache Bleche, gewellte oder gestanzte Strukturen, Gewebe und Gewebematrizen, Faserstrukturen und dreidimensionale Strukturen oder Kombinationen daraus beschichtet werden. Um eine gute Wärmeleitung und Wärmeanbindung für den Wärmetauscher zu erreichen, ist es erstrebenswert Metall-Trägerstrukturen zu verwenden. Als Metalloberflächen eignen sich alle Metalle, die die Belastung für die Wärmetauscheranwendung aushalten. Dies sind hauptsächlich Aluminium, Edelstahl und Kupfer, aber auch alle anderen Metalle mit entsprechender Oberflächenrauigkeit/Benetzbarkeit oder die sich entsprechend behandeln lassen.

Es ist hier aber auch möglich, diese Beschichtung auf Glas oder andere Polymere, besonders wärmeleitfähige Polymere, aufzutragen oder Kombinationen aus Metall-, Glas-, Keramik- und Polymerstrukturen zu verwenden.

Die Vorbereitung der Trägeroberfläche ist einfach durch Waschen und Entfetten (Aceton, Isopropanol, Ethanol) und/oder Anätzen der Oberfläche durch verschiedene Laugen und/oder Säuren zur Erhöhung der Oberflächenrauigkeit und oder -hydrophilisierung zu realisieren. Geeignete Ätzmittel sind z.B. für Aluminium NaOH, für Edelstähle allgemein NaOH (2 molar) oder Caro'sche Säure (H₂SO_{4/}H₂O₂ im Verhältnis 3:1 bis zu 50 % verdünnt). Für V4A-Stahl kann konzentrierte Salzsäure eingesetzt werden.

Für den Auftragungsvorgang sind alle Beschichtungsverfahren geeignet, die sich zum Auftragen einer wässrigen Dispersion anbieten. Hier sind geeignete Verfahren Dip-Coating, Spray-Coating und Spin-Coating, sowie manuelle Verfahren zum Aufbringen der Dispersion auch mit anschließender Scherung, Verstreichen oder Abtropfen. Zudem ist es möglich, diese Beschichtung auch unter Vakuumbedingungen durchzuführen. Insbesondere bei dichten Trägerstrukturen kann ein gleichmäßiges Einziehen durch eine poröse Struktur der Lösung durch Anlegen eines Druckgradienten (oder Vakuum) auf der einen Seite erreicht werden.

Die Schichtdicke hängt hierbei von dem verwendeten Sorbens, der Viskosität und Rheologie der Dispersion und der Anzahl der Auftragungsschritte ab. Prinzipiell möglich sind Schichtdicken von 50 nm bis mehreren Millimetern. Begrenzender Faktor nach unten hin ist der Durchmesser des verwendeten Sorbens, wobei hier auch eine Schüttklebung mit Polyorganosiloxan als Bindemittel möglich ist. Durch Verdünnung der Dispersion ist es möglich, eine niedrige Viskosität zu erzielen und damit dünnere Schichtdicken zu bekommen. Eine Erhöhung der Konzentration bewirkt eine höhere Viskosität und somit dickere Schichten. Des Weiteren sind mehre Auftragungs- bzw. Dip-Vorgänge möglich.

Der Vorteil der erfindungsgemäßen Beschichtungstechnik ist, dass die Oberfläche mechanisch als auch hydrothermal sehr belastbar ist. Nach Aushärtung besitzt die Beschichtung eine eher hydrophobe Oberfläche, die eine zusätzliche Degradation des Materials durch Kondensation auf der Oberfläche vermeidet. Die Wassertropfen haben hier einen sehr großen Kontaktwinkel zur Oberfläche, was in kleinen Kontaktflächen resultiert. Man bekommt aufgrund der hydrophoben Eigenschaften ähnlich gute Abperleigenschaften wie durch den Lotus-Effekt.

Trotz der hydrophoben Eigenschaften ist ein Wasserdampftransport durch die Schicht ins Sorbens noch ohne Einschränkung möglich. Dies zeigen Kinetikmessungen im Vergleich zu anderen Beschichtungen.

Ein weiterer Vorteil ist, dass durch die hier verwendete Beschichtung eine sehr gute Wärmeleitfähigkeit über die gesamte Schicht hergestellt wird und somit eine sehr gute Wärmeankopplung an die Wärmetauscher-Oberfläche gewährleistet ist. Prinzipiell lassen sich aber auch Hilfsstoffe zur Erhöhung der Wärmeleitfähigkeit, wie beispielsweise Graphit, Blähgraphit, Kohlenstoffröhren oder Fasern, Glasfasern, Metallnanopartikel oder Ähnliches beimischen.

Das Verfahren eignet sich für die Herstellung von beschichteten Wärmetauscherstrukturen, die entweder in Wärmepumpen oder Kältemaschinen sowie Wärmespeichern zum Einsatz kommen. Prinzipiell sind sowohl geschlossene Verfahren (reine Arbeitsmittelatmosphäre) als auch offene Verfahren unter Umgebungsdruck zur Entfeuchtung und/oder Kühlung als Anwendungsgebiet möglich. Insbesondere bei offenen Verfahren sind die Ansprüche an die mechanische Belastung sowie die einfache Verarbeitung durch das erfindungsgemäße Verfahren gut erfüllt.

Durch die direkte Beschichtung wird ein hoher Wärmeübergang sichergestellt und durch die Verwendung von Trägerstrukturen mit erhöhter Oberfläche und/oder Beimischung von Hilfsstoffen zur Erhöhung der Wärmeleitfähigkeit wird ein hoher nicht diffusions- oder wärmelimitierter Massentransport erreicht. Somit sind hohe Leistungsdichten und kompakte Bauweise realisierbar.

Das Sorbens ist selbst meistens nur gering mechanisch belastbar, durch die Verbindung mit dem Träger kann sowohl eine mechanische als auch eine hydrothermale Stabilisierung erreicht werden.

Erfindungsgemäß wird ebenso eine beschichtete Wärmetauscherstruktur bereitgestellt, die mindestens eine Trägerstruktur enthält, wobei die Beschichtung mindestens ein poröses Sorbens enthält, das mittels mindestens eines Bindemittels aus der Gruppe der Polyorganosiloxane an die Wärmetauscherstruktur gebunden ist.

Die erfindungsgemäße Beschichtung kann auch als Schutzschicht für eine Beschichtung, die durch eine direkte Kristallisation, also ohne Haftvermittler bzw. Binder ausgeführt wurde, eingesetzt werden, insbesondere als zusätzliche wasserabweisende Schutzschicht. Dies betrifft insbesondere die Anwendung mit Sorptionsmaterialien auf metallischen Träger in einer zyklischen Betriebsweise.

Anhand des nachfolgenden Beispiels soll der erfindungsgemäße Gegenstand näher erläutert werden, ohne diesen auf die hier gezeigten speziellen Ausführungsformen einschränken zu wollen.

### Beispiel

Ein Aluminium-Blech wird mit Aceton abgewaschen, bei Raumtemperatur für 90 Sekunden in 2-molarer NaOH-Lösung angeätzt und anschließend unter fließendem destilliertem Wasser abgewaschen und getrocknet.

1,069 g eines SAPO-34 werden in einem kleinen Rollrandgläschen mit 2,021 g destilliertem Wasser übergossen und geschüttelt. Die Dispersion erwärmt sich stark. Anschließend werden 0,454 g einer Dimethyl-Diphenyl-organo-Siloxan-Emulsion (50 Gew.-% in dest. Wasser) (z.B. SilRes MP50 der Firma Wacker) zugegeben und die Komponenten gut vermischt. Es entsteht eine milchig-weiße undurchsichtige Dispersion.

Nach 10 Minuten Schütteln wird die Dispersion mit einer 1 ml-Spritze gleichmäßig auf das Alu-Blech aufgetragen. Das beschichtete Blech wird auf einer Heizplatte auf 50 °C erwärmt und die Oberfläche damit langsam getrocknet. Es entsteht dadurch eine weiße geschlossene Oberfläche, die aber relativ weich und viskos ist.

Anschließend wird langsam bis auf 300 °C erhitzt, um eventuelle Rückstände zu entfernen. Erst bei kurzer Zeit auf 300 °C (ca. 30 min) verfärbt sich die Probe leicht bräunlich.

Nach dem Erkalten ist die Oberfläche sehr hart und fest. Zusätzlich zeigt sie hydrophobe Eigenschaften, ist aber immer noch dampfdurchlässig.

## Patentansprüche

1. Verfahren zur Beschichtung einer Wärmetauscherstruktur, bei dem
a) eine wässrige Dispersion aus mindestens einem porösen Sorbens sowie mindestens einem Bindemittel aus der Gruppe der Polyorganosiloxane hergestellt wird, wobei die Dispersion auf einer Wärmetauscherstruktur gebildet oder nach Herstellung auf einer Trägerstruktur aufgetragen wird und
b) eine Filmbildung und/oder Vernetzung des Bindemittels unter Ausbildung einer Schicht erfolgt,
wobei das mindestens eine Bindemittel ein Polyorganosiloxan aus der Gruppe aus aliphatischen, olefinischen und aromatischen Mono-, Di- und Triorganosiloxanen ist.

2. Verfahren nach Anspruch 1,
**dadurch gekennzeichnet, dass** die Dispersion über einen Zeitraum von mindestens 2 Stunden bis zu 24 Stunden stabil ist und keine Agglomerate bildet und/oder die Dispersion auch nach längerem Zeitraum über mindestens 4 Wochen redispergierbar und verwendbar bleibt.

3. Verfahren nach einem der vorhergehenden Ansprüche,
**dadurch gekennzeichnet, dass** mindestens ein Sorbens ausgewählt ist aus der Gruppe bestehend aus Silicagelen, Zeolithe, Aluminophosphate, Silicaaluminophosphate, metallorganische Gerüstverbindungen (MOFs), poröse Koordinationspolymere (PCPs), Zeolith-Imidazolat-Netzwerke (ZiFs), mesoporöse Molekularsiebe (MCMs), Aktivkohlen und Mischungen hiervon, wobei das mindestens eine Sorbens bevorzugt als Pulver, insbesondere mit einer mittleren Kristallitgröße von 50 nm bis 20 *µ*m und insbesondere mit einer mittleren Korngröße von 3 bis 200 *µ*m, vorliegt und/oder das mindestens eine Bindemittel ausgewählt ist aus der Gruppe bestehend aus aliphatischen, olefinischen und aromatischen Mono-, Di- und Triorganosiloxanen, die über einen Vernetzer, insbesondere Silane, Silikate, Kieselsäuren oder Natron-Wasserglas, vernetzt sein können.

4. Verfahren nach einem der vorhergehenden Ansprüche,
**dadurch gekennzeichnet, dass** die Dispersion, bezogen auf die Trockenmasse ohne Wasseranteil, folgende Zusammensetzung aufweist:
70% bis 95 Gew.-%, insbesondere von 80 bis 95 Gew.-% des Sorbens,
1 bis 20 Gew.-%, insbesondere von 5 bis 15 Gew.-% des Bindemittels,
0 bis 10 Gew.-% Zusatzstoffen ausgewählt aus der Gruppe der Stabilisatoren, Emulgatoren, niedermolekularen funktionellen Zusätzen zur Verbesserung der Verarbeitbarkeit sowie Mischungen hiervon.

5. Verfahren nach einem der vorhergehenden Ansprüche,
**dadurch gekennzeichnet, dass** die Filmbildung und/oder Vernetzung thermisch, insbesondere bei Temperaturen bis zu 300°C, insbesondere bei Temperaturen von 50 bis 80 °C, oder durch Anlegen eines Vakuums, oder durch Anlegen einer Spannung beschleunigt wird.

6. Verfahren nach einem der vorhergehenden Ansprüche,
**dadurch gekennzeichnet, dass** unmittelbar vor der Auftragung der Dispersion in Schritt b) die mindestens eine Trägerstruktur gereinigt wird, insbesondere durch Waschen mit einem organischen Lösungsmittel oder durch Ätzen mit einer Säure oder einer Lauge.

7. Verfahren nach einem der vorhergehenden Ansprüche,
**dadurch gekennzeichnet, dass** die Dispersion auf einer Wärmetauscherstruktur gebildet wird, indem zunächst das Bindemittel auf der Wärmetauschstruktur aufgebracht und anschließend das Sorbens in trockener oder befeuchteter Form geschüttet und anschließend getrocknet wird.

8. Verfahren nach einem der vorhergehenden Ansprüche,
**dadurch gekennzeichnet, dass** die Auftragung der Dispersion in Schritt b) mittels Tauchbeschichtung, Sprühbeschichtung oder Rotationsbeschichtung erfolgt.

9. Beschichtete Wärmetauscherstruktur mit vergrößerter Oberflächenstruktur enthaltend mindestens eine Trägerstruktur, wobei die Beschichtung mindestens ein poröses Sorbens enthält, das mittels mindestens eines Bindemittels aus der Gruppe der Polyorganosiloxane an die Wärmetauscherstruktur gebunden ist,
wobei das mindestens eine Bindemittel ein Polyorganosiloxan aus der Gruppe aus aliphatischen, olefinischen und aromatischen Mono-, Di- und Triorganosiloxanen ist.

10. Wärmetauscherstruktur nach Anspruch 9,
**dadurch gekennzeichnet, dass** die Wärmetauscherstruktur eine erhöhte Oberfläche aufweist, insbesondere durch ein-, zwei- oder dreidimensionale Strukturierung, bevorzugt in Form von Fasern und/oder Metallschwämmen.

11. Wärmetauscherstruktur nach Anspruch 9 oder 10,
**dadurch gekennzeichnet, dass** die Beschichtung eine Schichtdicke im Bereich von 100 nm bis 10 mm, insbesondere von 200 nm bis 1 mm aufweist.

12. Wärmetauscherstruktur nach einem der Ansprüche 14 bis 16,
**dadurch gekennzeichnet, dass** das mindestens eine Sorbens ausgewählt ist aus der Gruppe bestehend aus Silicagelen, Zeolithe, Aluminophosphate, Silicaaluminophosphate, metallorganische Gerüstverbindungen (MOFs), poröse Koordinationspolymere (PCPs), Zeolith-Imidazolat-Netzwerke, mesoporöse Molekularsiebe (MCMs), Aktivkohlen und Mischungen hiervon, wobei das mindestens eine Sorbens als Pulver, insbesondere mit einer mittleren Kristallitgröße von 50 nm bis 20 *µ*m und insbesondere mit einer mittleren Korngröße von 3 bis 200 *µ*m, vorliegt und/oder das mindestens eine Bindemittel ausgewählt ist aus der Gruppe bestehend aus aliphatischen, olefinischen und aromatischen Mono-, Di- und Triorganosiloxanen, die über einen Vernetzer, insbesondere Silane, Silikate, Kieselsäuren oder Natron-Wasserglas, vernetzt sein können, wobei die Beschichtung von 1 bis 20 Gew.-%, insbesondere von 5 bis 15 Gew.-% des Bindemittels enthält.

13. Wärmetauscherstruktur nach einem der Ansprüche 9 bis 12,
**dadurch gekennzeichnet, dass** die Beschichtung zusätzlich Stabilisatoren, Emulgatoren, niedermolekulare funktionelle Zusätze zur Verbesserung der Verarbeitbarkeit, die Wärmeleitfähigkeit erhöhende Komponenten, insbesondere Graphit, Blähgraphit, Kohlenstofffasern, Kohlenstoffröhren, Glasfasern, metallische Nanopartikel sowie Mischungen hiervon enthält.

14. Wärmetauscherstruktur nach einem der Ansprüche 9 bis 13,
**dadurch gekennzeichnet, dass** die mindestens eine Trägerstruktur aus einem Metall, insbesondere Aluminium, Kupfer oder Edelstahl, einem Glas, einem Polymer, einer Keramik oder Kombinationen von diesen besteht oder diese im Wesentlichen enthält.

15. Verwendung der Wärmetauscherstruktur nach einem der Ansprüche 9 bis 14 in Wärmepumpen, Kältemaschinen sowie zur Entfeuchtung und sorptionsgestützte Klimatisierung.

## Claims

1. Method for coating a heat exchanger structure, in which
a) an aqueous dispersion of at least one porous sorbent and also at least one binder from the group of polyorganosiloxanes is produced, the dispersion being formed on a heat exchanger structure or being applied on a carrier structure after production and
b) film formation and/or crosslinking of the binder with formation of a layer being effected,
wherein the at least one binder is a polyorganosiloxane from the group of aliphatic, olefinic and aromatic mono-, di- and triorganosiloxanes.

2. Method according to claim 1,
**characterised in that** the dispersion is stable over a period of time of at least 2 hours up to 24 hours and forms no agglomerates and/or the dispersion remains redispersible and usable even after a fairly long period of time, over at least 4 weeks.

3. Method according to one of the preceding claims,
**characterised in that** at least one sorbent is selected from the group consisting of silica gels, zeolites, aluminophosphates, silica-aluminophosphates, metallo-organic framework compounds (MOFs), porous coordination polymers (PCPs), zeolite-imidazolate networks (ZiFs), mesoporous molecular sieves (MCMs), activated carbons and mixtures hereof, wherein the at least one sorbent is preferably present as a powder, in particular with an average crystallite size of 50 nm to 20 µm and in particular with an average grain size of 3 to 200 µm and/or the at least one binder is selected from the group consisting of aliphatic, olefinic and aromatic mono-, di- and triorganosiloxanes which can be crosslinked via a crosslinker, in particular silanes, silicates, silicic acids or soda waterglass.

4. Method according to one of the preceding claims, **characterised in that** the dispersion, relative to the dry mass without a water component, has the following composition:
70% to 95% by weight, in particular from 80 to 95% by weight, of the sorbent,
1 to 20% by weight, in particular from 5 to 15% by weight, of the binder,
0 to 10% by weight of additives, selected from the group of stabilisers, emulsifiers, low-molecular functional additives for improving the processibility and also mixtures hereof.

5. Method according to one of the preceding claims, **characterised in that** the film formation and/or crosslinking is accelerated thermally, in particular at temperatures up to 300°C, in particular at temperatures of 50 to 80°C, or by applying a vacuum, or by applying a voltage.

6. Method according to one of the preceding claims, **characterised in that**, immediately before application of the dispersion in step b), the at least one carrier structure is cleaned, in particular by washing with an organic solvent or by etching with an acid or a caustic solution.

7. Method according to one of the preceding claims, **characterised in that** the dispersion is formed on a heat exchanger structure by the binder being applied firstly on the heat exchanger structure and subsequently the sorbent being poured in dry or moistened form and subsequently dried.

8. Method according to one of the preceding claims,
**characterised in that** the application of the dispersion in step b) is effected by means of dip coating, spray coating or rotational coating.

9. Coated heat exchanger structure with enlarged surface structure, comprising at least one carrier structure, the coating comprising at least one porous sorbent which is bonded to the heat exchanger structure by means or at least one binder from the group of polyorganosiloxanes,
wherein the at least one binder is a polyorganosiloxane from the group of aliphatic, olefinic and aromatic mono-, di- and triorganosiloxanes.

10. Heat exchanger structure according to claim 9,
**characterised in that** the heat exchanger structure has an enlarged surface, in particular by means of one-, two- or three-dimensional structuring, preferably in the form of fibres and/or metal sponges.

11. Heat exchanger structure according to claim 9 or 10,
**characterised in that** the coating has a layer thickness in the range of 100 nm to 10 mm, in particular from 200 nm to 1 mm.

12. Heat exchanger structure according to one of the claims 14 to 16,
**characterised in that** the at least one sorbent is selected from the group consisting of silica gels, zeolites, aluminophosphates, silica aluminophosphates, metallo-organic framework compounds (MOFs), porous coordination polymers (PCPs), zeolite-imidazolate networks, mesoporous molecular sieves (MCMs), activated carbons and mixtures hereof, wherein the at least one sorbent is present as a powder, in particular with an average crystallite size of 50 nm to 20 µm and in particular with an average grain size of 3 to 200 µm and/or the at least one binder is selected from the group consisting of aliphatic, olefinic and aromatic mono-, di- and triorganosiloxanes which can be crosslinked via a crosslinker, in particular silanes, silicates, silicic acids or soda waterglass, wherein the coating comprises from 1 to 20% by weight, in particular from 5 to 15% by weight, of the binder.

13. Heat exchanger structure according to one of the claims 9 to 12,
**characterised in that** the coating comprises in addition stabilisers, emulsifiers, low-molecular functional additives for improving the processibility, components increasing the heat conductivity, in particular graphite, expanded graphite, carbon fibres, carbon tubes, glass fibres, metallic nanoparticles or also mixtures hereof.

14. Heat exchanger structure according to one of the claims 9 to 13,
**characterised in that** the at least one carrier structure consists of a metal, in particular aluminium, copper or stainless steel, a glass, a polymer, a ceramic or combinations of these or essentially comprises these.

15. Use of the heat exchanger structure according to one of the claims 9 to 14 in heat pumps, refrigeration machines and also for dehumidification and sorption-assisted air-conditioning.

## Revendications

1. Procédé pour revêtir une structure d'échange de chaleur, dans lequel
a) on fabrique une dispersion aqueuse d'au moins un solvant poreux, ainsi que d'au moins un liant du groupe des polyorganosiloxanes, la dispersion étant formée sur une structure d'échange de chaleur ou étant appliquée après fabrication sur une structure portante, et
b) on procède à la formation d'un film et/ou à une réticulation du liant, avec formation d'une couche,
dans lequel l'au moins un liant est un polyorganosiloxane du groupe des mono-, des di- et des tri-organosiloxanes aliphatiques, oléfiniques et aromatiques.

2. Procédé selon la revendication 1, **caractérisé en ce que** la dispersion est stable sur un laps de temps d'au moins 2 heures et allant jusqu'à 24 heures, et ne forme aucun agglomérat, et/ou que la dispersion reste redispersible et utilisable même après un laps de temps plus long, pendant au moins 4 semaines.

3. Procédé selon l'une des revendications précédentes, **caractérisé en ce qu'**on choisit au moins un sorbant dans le groupe consistant en les gels de silice, les zéolites, les aluminophosphates, les silico-aluminophosphates, les structures organométalliques poreuses (MOF), les polymères de coordination poreux (PCP), les réseaux imidazolates zéolitiques (ZiF), les tamis moléculaires mésoporeux (MCM), les charbons actifs et les mélanges de ceux-ci, auquel cas l'au moins un sorbant se présente de préférence sous forme d'une poudre, ayant en particulier une grosseur moyenne des cristallites de 50 nm à 20 µm et en particulier une granulométrie moyenne de 3 à 200 µm, et/ou l'au moins un liant est choisi dans le groupe consistant en les mono-, les di- et les tri-organosiloxanes aliphatiques, oléfiniques et aromatiques, qui peuvent être réticulés à l'aide d'un agent de réticulation, en particulier des silanes, des silicates, des silices ou du silicate de soude.

4. Procédé selon l'une des revendications précédentes, **caractérisé en ce que** la dispersion présente, par rapport à sa masse à sec, sans l'eau présente, la composition suivante :
70 % à 95 % en poids, en particulier de 80 à 95 % en poids du sorbant,
1 à 20 % en poids, en particulier de 5 à 15 % en poids du liant,
0 à 10 % en poids d'additifs choisis dans le groupe des stabilisants, des émulsifiants, des additifs fonctionnels à faible masse moléculaire destinés à améliorer l'aptitude à la mise en oeuvre, ainsi que les mélanges de ceux-ci.

5. Procédé selon l'une des revendications précédentes, **caractérisé en ce que** la formation d'un film et/ou la réticulation sont accélérés par la chaleur, en particulier à des températures allant jusqu'à 300°C, en particulier à des températures de 50 à 80°C, ou par application d'un vide, ou par application d'une tension.

6. Procédé selon l'une des revendications précédentes, **caractérisé en ce que**, immédiatement avant application de la dispersion dans l'étape b), on purifie l'au moins une structure portante, en particulier par lavage avec un solvant organique, ou par attaque avec un acide ou une base.

7. Procédé selon l'une des revendications précédentes, **caractérisé en ce que** la dispersion est formée sur une structure d'échange de chaleur par le fait que l'on applique d'abord le liant sur la structure d'échange de chaleur, puis on verse en vrac le sorbant sous forme sèche ou humidifiée, puis on le sèche.

8. Procédé selon l'une des revendications précédentes, **caractérisé en ce que** l'application de la dispersion dans l'étape b) s'effectue par revêtement au trempé, revêtement par pulvérisation ou revêtement à la tournette.

9. Structure d'échange de chaleur revêtue, présentant une structure superficielle augmentée, contenant au moins une structure portante, dans laquelle le revêtement contient au moins un sorbant poreux, qui à l'aide d'au moins un liant du groupe des polyorganosilanes est lié à la structure d'échange de chaleur,
dans laquelle l'au moins un liant est un polyorganosiloxane du groupe des mono-, des di- et des tri-organosiloxanes aliphatiques, oléfiniques et aromatiques.

10. Structure d'échange de chaleur selon la revendication 9, **caractérisée en ce que** la structure d'échange de chaleur présente une aire augmentée, en particulier par une structuration mono-, bi- ou tridimensionnelle, de préférence sous forme de fibres et/ou d'éponges métalliques.

11. Structure d'échange de chaleur selon la revendication 9 ou 10, **caractérisée en ce que** le revêtement présente une épaisseur de couche comprise dans la plage de 100 nm à 10 mm, en particulier de 200 nm à 1 mm.

12. Structure d'échange de chaleur selon l'une des revendications 14 à 16, **caractérisée en ce que** l'au moins un sorbant est choisi dans le groupe consistant en les gels de silice, les zéolites, les aluminophosphates, les silico-aluminophosphates, les structures organométalliques poreuses (MOF), les polymères de coordination poreux (PCP), les réseaux d'imidazolates zéolitiques, les tamis moléculaires mésoporeux (MCM), les charbons actifs et les mélanges de ceux-ci, dans lequel l'au moins un sorbant se présente sous forme d'une poudre, ayant en particulier une grosseur moyenne des cristallites de 50 nm à 20 µm et ayant en particulier une granulométrie moyenne de 3 à 200 µm, et/ou l'au moins un liant est choisi dans le groupe consistant en les mono-, les di- et les tri-organosiloxanes aliphatiques, oléfiniques et aromatiques, qui peuvent être réticulés à l'aide d'un agent de réticulation, en particulier des silanes, des silicates, des silices ou du silicate de soude, le revêtement contenant de 1 à 20 % en poids, en particulier de 5 à 15 % en poids du liant.

13. Structure d'échange de chaleur selon l'une des revendications 9 à 12, **caractérisée en ce que** le revêtement contient en outre des stabilisants, des émulsifiants, des additifs fonctionnels à faible masse moléculaire, destinés à améliorer l'aptitude à la mise en oeuvre, des composants augmentant la conductivité thermique, en particulier le graphite, le graphite expansé, les fibres de carbone, les tubes de carbone, les fibres de verre, les nanoparticules métalliques, ainsi que les mélanges de ceux-ci.

14. Structure d'échange de chaleur selon l'une des revendications 9 à 13, **caractérisée en ce que** l'au moins une structure portante est constituée d'un métal, en particulier l'aluminium, le cuivre ou l'acier inoxydable, d'un verre, d'un polymère, d'une céramique ou de combinaisons de ceux-ci, ou pour l'essentiel les contient.

15. Utilisation de la structure d'échange de chaleur selon l'une des revendications 9 à 14 dans des pompes à chaleur, des machines frigorifiques, ainsi que pour la déshumidification et la climatisation assistée par sorption.
